# EUROPÄISCHE PATENTSCHRIFT

(11) **EP 2 377 102 B1**
(45) Veröffentlichungstag und Bekanntmachung des Hinweises auf die Patenterteilung: **17.10.2018**
(21) Anmeldenummer: 09801421.0
(22) Anmeldetag: 27.11.2009
(51) Int. Cl.: G07C 7/00, G01D 5/00, G01P 13/00

(54) **SENSORANORDNUNG, TACHOGRAPHENANORDNUNG UND VERFAHREN ZUR ERKENNUNG EINER MANIPULATION**
SENSOR ASSEMBLY, TACHOGRAPH ASSEMBLY AND METHOD FOR RECOGNITION OF A MANIPULATION
AGENCEMENT DE CAPTEUR, AGENCEMENT DE TACHYGRAPHE ET PROCÉDÉ DE DÉTECTION D'UNE MANIPULATION

(30) Priorität: 15.12.2008 DE 102008061924
(43) Veröffentlichungstag der Anmeldung: 19.10.2011
(73) Patentinhaber: Continental Automotive GmbH, 30165 Hannover (DE)
(72) Erfinder: PLANKENHORN, Horst, 78048 Villingen-Schwenningen (DE)
(86) Internationale Anmeldenummer: PCT/EP2009/065959
(87) Internationale Veröffentlichungsnummer: WO 2010/072508

(56) Entgegenhaltungen:
- WO-A1-2008/040686
- US-A- 5 926 016
- US-A1- 2002 109 501
- US-B1- 6 522 131

## Beschreibung

Gegenstand der Erfindung ist eine Sensoranordnung nach dem Oberbegriff des Anspruchs 1 sowie eine Tachographenanordnung mit einer derartigen Sensoranordnung.

Im Bereich der Betriebsdatenaufzeichnung eines Nutzfahrzeuges werden aufgrund des urkundlichen Charakters der Aufzeichnungen häufig Manipulationen versucht. In der Vergangenheit wurden insbesondere die Tachographen selbst von diesen Versuchen betroffen. Seit der Einführung der digitalen Tachographen sind aufgrund der verbesserten Verschlüsselungen Manipulationsversuche am Tachographen selbst jedoch stark rückläufig. Es werden jedoch vermehrt Manipulationsversuche an den Sensoranordnungen, welche die Impulsgeber für die Tachographen umfassen, und an den Schnittstellen der Sensoranordnung zum Getriebe, beobachtet. Die Anforderungen an die Sensoranordnungen sind unter anderem dem internationalen Standard ISO 16844-3 "Road vehicles - Tachograph systems - Part 3: Motion sensor interface" entnehmbar.

Aus US 6 522 131 B1 ist ein Sensorsystem mit einem Hall-Effekt-Sensor bekannt. Das Sensorsystem umfasst eine Schaltungsanordnung, die den Hall-Effekt in einer Weise konfiguriert, dass verschiedene Modi betrieben werden können. In einem ersten Modus wird eine Bestimmung, ob ein Zahnrad vorhanden ist oder nicht, durchgeführt. In einem zweiten Modus wird eine zeitliche Fehlerfreiheit überprüft. Zu diesem Zweck weist die Schaltungsanordnung magnetische Sensorelemente auf, die das Vorhandensein von den zu detektierenden Elementen, wie Zahnrädern, durchführt.

In der WO 97/35282 A1 wird ein Verfahren zur Vermeidung von Manipulationen der Übertragungsstrecke eines Impulsgebersignals an ein Kontrollgerät, sowie eine dementsprechende Datenübertragungsvorrichtung offenbart. Eine Manipulation der gemessenen Größe des Sensors kann jedoch nicht detektiert werden.

Eine weitere Möglichkeit der Manipulation besteht darin, die in Echtzeit übertragenen Impulsgebersignale zu manipulieren. Ein Verfahren zur Vermeidung wird beispielsweise in der DE 10 2004 043 052 B3 offenbart.

Eine weitere Manipulationsmöglichkeit besteht in der Verwendung eines manipulierten Impulsgebers. Ein Verfahren zur Erkennung des Vorhandenseins eines derartigen manipulierten Impulsgebers ist in der DE 195 22 257 A1 beschrieben.

In der EP 0 892 366 B1 wird ein Verfahren zur Vermeidung von Manipulationen an einem Taxameter oder einem Fahrtschreiber beschrieben, bei welchem eine Gegenmaßnahme eingeleitet wird, wenn ein die Fahrzeuggeschwindigkeit repräsentierendes Impulsgebersignal amplitudenmoduliert ist. Hierdurch wird verhindert, dass das Impulsgebersignal mit einer Impulsfrequenz von einem zweiten Signal unterschiedlicher Frequenz überlagert wird. Jedoch vermag das Verfahren keine Lösung zu bieten, wenn das Impulsgebersignal derart manipuliert wird, dass die Impulsfrequenz gegen Null tendiert. Eine Überlagerung mit dem zweiten Signal hätte zur Folge, dass der Tachograph ausschließlich die Frequenz des zweiten Signals messen würde.

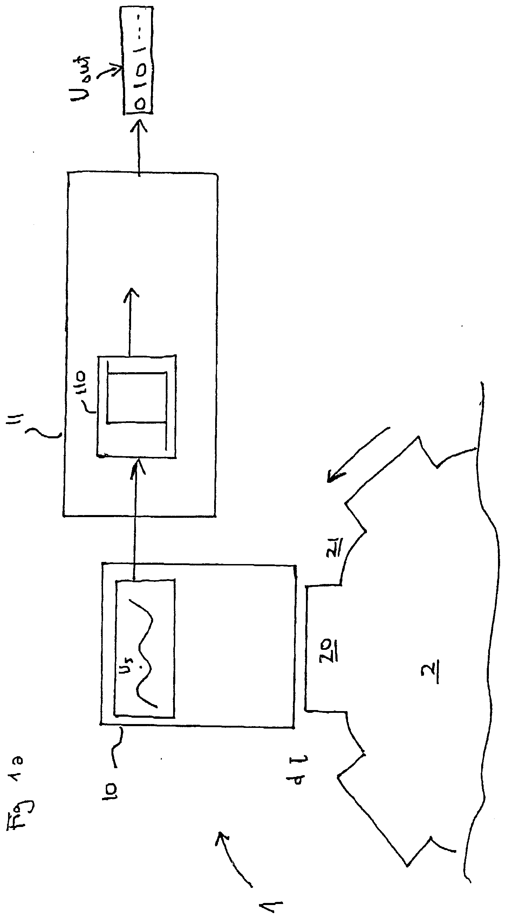

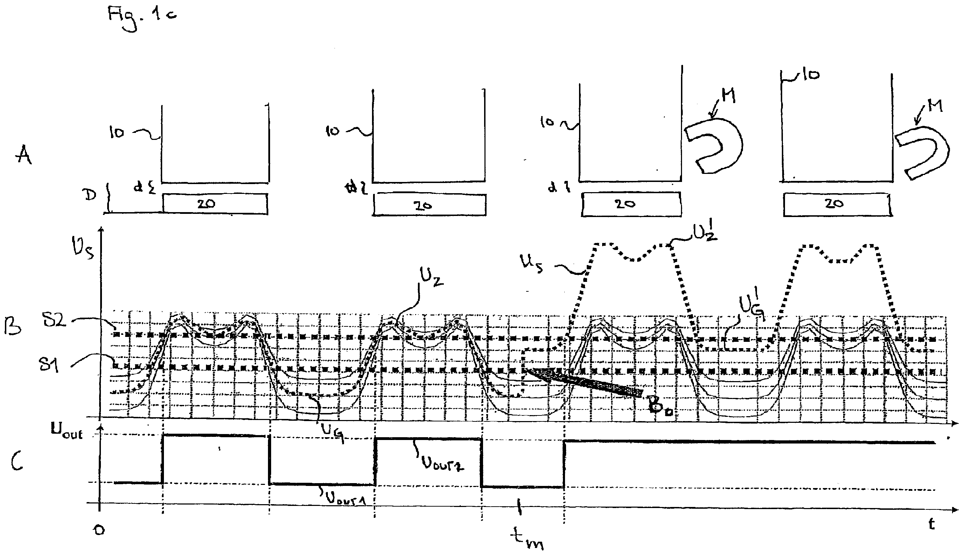

Die vorgenannten Verfahren sind nicht geeignet eine Manipulation der zu messenden Größe selbst zu erkennen. So kann bei der Verwendung von Sensoren, welche ein von einer Größe eines Magnetfelds abhängiges Sensorsignal liefern, eine Manipulation mit Hilfe eines zusätzlichen Magneten durchgeführt werden: Der zusätzliche Magnet wird direkt am Getriebe oder direkt an der Sensoranordnung angebracht. Das Magnetfeld des zusätzlichen Magneten überlagert das im Bereich des Sensors anliegende und aufgrund einer Getriebebewegung modulierte Sensormagnetfeld derart, dass die Modulation des Sensormagnetfelds klein gegenüber dem zusätzlichen Magnetfeld ist. Dies führt zu einer Verschiebung des Arbeitspunkts der Sensoranordnung und resultiert in einem fehlerhaften Impulsgebersignal. Diese Art der Manipulation wird anhand der Fign. 1a-d ausführlich erläutert.

Aufgabe der vorliegenden Erfindung ist es, eine Sensoranordnung und eine Tachographenanordnung zur zuverlässigen Erkennung einer oben genannten Manipulation zu schaffen.

Die erfindungsgemäße Sensoranordnung weist die Merkmale des Anspruchs 1 auf.

Das Sensorsignal wird an einen Eingang der Vorrichtung zur Signalverarbeitung übermittelt. Die Vorrichtung ist derart ausgebildet, dass ein erster Vergleicher vorhanden ist, welcher das Sensorsignal mit mindestens einem Schwellenwert vergleicht und davon abhängig ein Impulsgebersignal mit einem ersten oder zweiten Wert, bzw. in einem ersten oder zweiten Wertebereich liegend, erzeugt.

Erfindungswesentlich ist die Vorrichtung ferner derart ausgebildet, dass ein zweiter Vergleicher vorhanden ist, welcher das Sensorsignal mit einem vorgegeben Arbeitsbereich vergleicht und ein Manipulationssignal initiiert, wenn ein Wert des Sensorsignals beispielsweise einmal, periodisch, quasiperiodisch oder zumindest abschnittsweise außerhalb des Arbeitsbereichs im Manipulationsbereich ist. Der Arbeitsbereich kann beispielsweise über ein vorgegebenes Werteintervall von zulässigen Werten des Sensorsignals definiert sein.

Der Arbeitsbereich wird derart eingestellt, dass sämtliche im Soll-Betriebszustand der Sensoranordnung auftretenden Werte des Sensorsignals umfasst sind. Dabei wird vorteilhafterweise berücksichtigt, dass die in der Sensoranordnung verwendeten Bauteile einen Drift oder Fertigungstoleranzen aufweisen können. Auch im Rahmen von Alterungsprozessen auftretende Änderungen können berücksichtigt werden. Der Arbeitsbereich wird im zweiten Vergleicher hinterlegt.

Auch der mindestens eine Schwellenwert wird derart definiert, dass innerhalb eines Impulszyklus ein Wert des Sensorsignals im Soll-Betriebszustand oberhalb und ein weiterer Wert des Sensorsignals im Soll-Betriebszustand unterhalb des Schwellenwertes liegen.

Wird die Sensoranordnung im Ist-Betriebszustand, d.h. im betrieblichen Alltag, ordnungsgemäß betrieben, erreichen die Werte des Sensorsignals keine Werte außerhalb des Arbeitsbereichs: Das Sensorsignal bewegt sich periodisch oder quasiperiodisch zwischen einem maximalen Wert und einem minimalen Wert.

Wird im Ist-Betriebszustand nun ein zusätzliches, das Sensormagnetfeld überlagerndes Magnetfeld in den Bereich der Sensoranordnung gebracht, verschiebt sich das Sensorsignal um einen zum Einfluss des externen Magnetfelds proportionalen Betrag. Der Arbeitsbereich ist derart gewählt, dass mindestens ein Wert des Sensorsignals außerhalb des definierten bzw. vorgegebenen Arbeitsbereichs liegt und ein Manipulationssignal initiiert wird, wenn der Versatz des Sensorsignals derart groß ist, dass sich der Zustand des Impulsgebersignals nicht mehr ändern würde. Das Manipulationssignal kann ein (sprunghafte) Änderung eines Signals, das Ausbleiben eines Signals, oder das Generieren eines Signals umfassen und wird an einem Ausgang der Vorrichtung zur Signalverarbeitung ausgegeben. Das Manipulationssignal kann beispielsweise in weiteren Vorrichtungen der Sensoranordnung oder einer Tachographenanordnung weiter verarbeitet werden.

Im Falle einer Tachographenanordnung kann das Manipulationssignal mittels einer einem Tachographen zugeordneten Vorrichtung zum Erstellen einer Fehlerfunktion und/oder eines Fehlerprotokolls eine Fehlfunktion des Tachographen auslösen, den Tachographen sperren oder das Anlegen eines Fehlerprotokolls einleiten. Das Fehlerprotokoll kann beispielsweise während einer Wartung oder einer Aktualisierung des Tachographen auf eine externe Datenverarbeitungsanlage übertragen werden.

Die Sensoranordnung wird also dadurch abgesichert, dass eine Manipulation nicht zwangsläufig verhindert wird, sondern in der Abgabe eines Manipulationssignals resultiert. Das Manipulationssignal kann einen angeschlossenen Tachographen (oder auch ein Taxameter) sperren und eine Fehlfunktion auslösen, welche nur in einer Fachwerkstatt behoben werden kann.

Vorteilhaft ist auch, dass die Messung des Magnetfelds mittels gängiger Sensoren möglich ist. Es ist lediglich die Anordnung des zweiten Vergleichers nötig. Ob die Vorrichtung zur Signalverarbeitung als Leiterplatte mit darauf angeordneten Bauelementen, als Logikverschaltung eines Mikrokontrollers, in Form einer sich auf einem Mikrokontroller befindlichen Soft- oder Firmware oder Mischformen der vorhergehenden Beispiele ausgebildet ist, ist vom Verwendungszweck der Sensoranordnung abhängig.

Weitere Ausführungsformen der Erfindung sind in den untergeordneten Ansprüchen aufgeführt.

In einer Ausführungsform verarbeitet der erste Vergleicher mindestens zwei Schwellenwerte. Die zwei Schwellenwerte können eine Schalthysteresefunktion definieren, d.h. ein erster Schwellenwert ist kleiner als ein zweiter Schwellenwert und eine Änderung des Zustands des Impulsgebersignals erfolgt nur dann, wenn ein Wert des Sensorsignals den ersten Schwellenwert unterschreitet und ein weiterer Wert des Sensorsignals den zweiten Schwellenwert überschreitet. Durch die Schalthysteresefunktion wird die Vorrichtung robuster gegenüber Fluktuationen des Sensorsignals.

Als besonders vorteilhaft hat es sich herausgestellt, wenn die Schalthysteresefunktion eine dynamische (bzw. anpassbare oder nachführbare) Schalthysteresefunktion ist. Bei einer Manipulation werden die Schwellenwerte an den aufgrund des Magneten auftretenden Versatzes des Sensorsignals zu aufgrund der Manipulation nachgeführten Schwellenwerten angepasst, so dass das Impulsgebersignal weiterhin den Verlauf des Sensorsignals abbildet. Oftmals ist die dynamische Nachführung jedoch in ihrem Wirkungsbereich begrenzt. Es sei noch angemerkt, dass die dynamische Nachführung auch mit nur einem Schwellenwert möglich ist. Die dynamische Nachführung der Schwellenwerte hat weiterhin den Vorteil, dass der Sensor auch statisch arbeitet.

In einer weiteren Ausführungsform wird das Sensorsignal dynamisch nachgeführt. Dabei wird das Sensorsignal von seinen niederfrequenten Anteil befreit, so dass eine Manipulation mit einem statischen Magnetfeld weitgehend ausgeschlossen ist. Die Nachführung des Sensorsignals hat den Vorteil, dass nicht mehrere Variablen der Sensoranordnung durch Toleranzen oder unterschiedliche Drifte beeinflusst werden.

Die Vorrichtung weist einen dritten Vergleicher auf, wobei dieser das Sensorsignal mit einem sicheren Arbeitsbereich vergleicht und der sichere Arbeitsbereich vollständig vom Arbeitsbereich umfasst wird. Der sichere Arbeitsbereich kann beispielsweise durch ein im Arbeitsbereich liegendes Werteintervall definiert sein.

Dabei kann der sichere Arbeitsbereich dem Arbeitsbereich entsprechend derart gewählt werden, dass ebenfalls sämtliche im Soll-Betriebszustand ermittelten Werte des Sensorsignals umfasst sind.

Zwischen dem Arbeitsbereich und dem sicheren Arbeitsbereich entsteht ein Sicherungsband. Befindet sich ein Wert des Sensorsignals innerhalb des Sicherungsband kann eine Auswertungseinheit einen Vergleich mit dem Impulsgebersignal einleiten: Verändert sich das Impulsgebersignal über einen bestimmten Zeitraum hinweg nicht, wird eine Fehlfunktion oder ein Wartungsbedarf eines an die Sensoranordnung angeschlossenen Tachographen angezeigt.

In Kombination mit einer dynamischen Nachführung kann das Sicherungsband (bzw. der Arbeitsbereich oder der sichere Arbeitsbereich) derart gewählt werden, dass eine dynamische Nachführung der Schwellenwerte der Größe des Sicherungsbandes entsprechend möglich ist: Aufgrund der dynamischen Nachführung der Schwellenwerte bildet das Impulsgebersignal weiterhin den Verlauf es Sensorsignals ab, es wird jedoch zugleich festegestellt, dass eine vermeintliche Manipulation vorliegt, da Werte des Sensorsignals im Sicherungsband liegen. Wird das manipulierende Magnetfeld verstärkt, so dass eine dynamische Nachführung nicht länger möglich ist, wandert das Sensorsignal zumindest abschnittsweise in den Manipulationsbereich und bewirkt so die Initiierung eines Manipulationssignals.

Weitere Ausführungsformen sind den weiteren untergeordneten Ansprüchen sowie den Ausführungsbeispielen entnehmbar.

Ein Verfahren, die Sensoranordnung und die Tachographenanordnung sollen anhand von Ausführungsbeispielen, wie in den Figuren dargestellt, genauer erläutert werden.

Es zeigen die
- Figuren 1a-d: ein Verfahren und Anordnungen nach dem Stand der Technik;
- Figur 2: ein Verfahren nach dem Stand der Technik;
- Figuren 3a und: b ein Ausführungsbeispiel des erfindungsgemäßen Verfahrens und eine Sensoranordnung;
- Figuren 4a-c: schematische Darstellungen des Soll-Betriebszustands und des Ist-Betriebszustands;
- Figur 5: ein Ausführungsbeispiel einer Tachographenanordnung.

Anhand der Figuren 1a-d soll zunächst die der Erfindung zugrunde liegende Problematik erläutert werden.

Die Figur 1a zeigt eine Sensoranordnung 1, welche einen Sensor 10 und eine Vorrichtung zur Signalverarbeitung 11 aufweist. Der gezeigte Sensor 10 soll nachfolgend ein Hallsensor mit einem integrierten Verstärker sein, wobei das Sensorsignal Uₛ ein analoges Ausgangssignal ist. Der Sensor 10 ist in der Nähe eines Zahnrads 2 angeordnet, wobei sich das Zahnrad 2 in einer Drehrichtung R dreht, wenn sich ein Fahrzeug bewegt und die zurückgelegte Fahrstrecke des Fahrzeugs proportional zur Drehzahl des Zahnrads oder zu einer zur Drehzahl proportionalen Größe ist.

Das Zahnrad 2 weist Zähne 20 und zwischen den Zähnen liegende Lücken 21 auf. Der Abstand zwischen den Zähnen 20 und dem Sensor 10 beträgt d. Bewegt sich das Zahnrad 2 in der Drehrichtung R, so verändert sich der Abstand des Zahnrads 2 zum Sensor 10 abhängig davon, ob ein Zahn 20 oder eine Lücke 21 den Sensor 10 passiert. Da das Zahnrad magnetisch ist bzw. eine dem Sensor 10 zugewandte Oberfläche des Zahnes 20 bzw. der Lücke 21 magnetische Eigenschaften aufweist, registriert der Sensor 10 eine Modulation des Magnetfelds und moduliert das Sensorsignal Uₛ dementsprechend. Das Zahnrad ist lediglich ein Beispiel zur Illustration der Modulation des Magnetfelds.

Da es sich bei dem Sensor 10 um einen Hallsensor handelt, welcher mit konstantem Hallstrom betrieben wird, ist die Hallspannung das Sensorsignal Uₛ.

Das Sensorsignal Uₛ wird in einer Vorrichtung zur Signalverarbeitung weiterverarbeitet. Im Stand der Technik weist diese Vorrichtung zumeist einen Vergleicher 110 auf, welcher zumindest einen Schwellenwert vorhält. Der Schwellenwert ist dabei derart gewählt, dass ein durch einen Zahn 20 bewirkter Wert des Sensorsignals oberhalb des Schwellenwertes liegt und ein durch die Lücke 21 bewirkter Wert des Sensorsignals unterhalb des Schwellenwertes liegt. Um gegenüber Schwankungen und Fluktuationen des Sensorsignals robuster zu werden, kann auch eine Schalthysteresefunktion mit zwei Schwellenwerten eingeführt werden, wie dies beispielsweise in einem Schmitt-Trigger realisiert ist. Am Ausgang des Vergleichers 110 wird ein Impulsgebersignal Uₒᵤₜ ausgegeben, welcher beispielsweise in digitaler Form vorliegt. Dabei kann der Zustand "0" das Vorhandensein einer Lücke, der Zustand "1" das Vorhandensein eines Zahns abbilden. Aus der alternierenden Abfolge des Impulsgebersignals und den dazu gehörigen Zeitintervallen ist es einem der Sensoranordnung 1 nachgeschalteten Tachographen möglich, die Geschwindigkeit bzw. die zurückgelegte Wegstrecke des Fahrzeugs zu ermitteln.

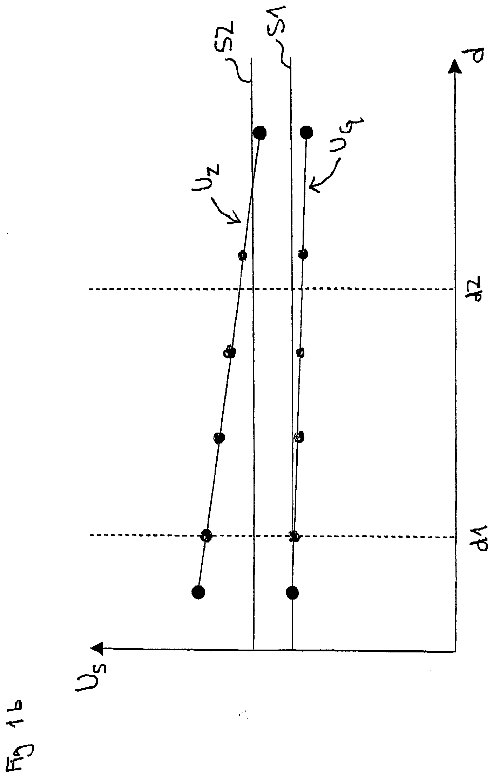

In der Figur 1b ist ein zur Figur 1a gehöriges schematisches Diagramm abgebildet. Auf der Abszisse ist der Abstand d zwischen Zahn 20 und Sensor 10 aufgetragen. Auf der Ordinate ist der Wert des Sensorsignals Uₛ in Volt aufgetragen. Zwischen den Abständen d1 und d2 befinden sich die möglichen Arbeitsabstände zwischen dem Sensor 10 und dem Zahn 20, wie in der Figur 1a gezeigt. Kleinere Abstände als d1 bzw. größere Abstände als d2 sind aufgrund von Fertigungstoleranzen, Abnutzungen oder Manipulationen des Abstands möglich.

In der Figur 1b sind Schwellenwerte S1 und S2 eingetragen, welche die Schwellenwerte eines Schmitt-Triggers oder eines anderen Schwellenwertdetektors sind. Der durch den Sensor 10 aufgrund eines passierenden Zahnes 20 gemessene maximale Wert des Sensorsignals Uₛ ist für verschiedene Abstände d aufgetragen und als Zahnspannung U_{z} bezeichnet. Der aufgrund einer passierenden Lücke 21 gemessene minimale Wert des Sensorsignals Uₛ ist ebenfalls für verschiedene Abstände d aufgetragen und als Lückenspannung U_{G} bezeichnet. Im Bereich der möglichen Arbeitsabstände, welche im Soll-Betriebszustand zwischen dem Abstand d1 und d2 liegen, befinden sich sämtliche Werte der Zahnspannung U_{z} oberhalb des zweiten Schwellenwertes S2. Analog sind sämtliche Werte der Lückenspannung U_{G} unterhalb des Schwellenwertes S1. Das Sensorsignal Uₛ alterniert also zwischen einem Wert der Lückenspannung U_{G} und einem Wert der Zahnspannung U_{z}. Dadurch erzeugt der Vergleicher 110 ein alternierendes Impulsgebersignal.

Anhand der Figur 1c soll erläutert werden, wie ein Manipulationsversuch das Impulsgebersignal derart ändert, dass dieses lediglich einen einzigen Wert bzw. Zustand ausgibt. In oberen Abschnitt A der Figur 1c ist der Sensor 10 mit einem im Abstand d1 angeordneten Zahn 20 gezeigt. Im Abschnitt B ist das Sensorsignal Uₛ, sowie der erste und zweite Schwellenwert S1, S2 eingezeichnet. Im dritten Abschnitt C ist das zeitabhängige Impulsgebersignal Uₒᵤₜ dargestellt.

Beim Vorbeilaufen des Zahnes 20 steigt das Sensorsignal Uₛ über den Schwellenwert S2 bis zum dem Abstand d1 entsprechenden Wert der Zahnspannung U_{z} an. Nach dem Durchlaufen des Zahnes fällt das Sensorsignal Uₛ bis zu einem entsprechenden Wert der Lückenspannung U_{G} ab. Korrespondierend zum Überschreiten des Schwellenwertes S2 bzw. zum Unterschreiten des Schwellenwertes S1 wird das Impulsgebersignal Uₒᵤₜ in einem ersten Zustand Uₒᵤₜ₁ korrespondierend zu einer Lücke und in einem zweiten Zustand Uₒᵤₜ₂ korrespondierend zu einem Zahn gesetzt.

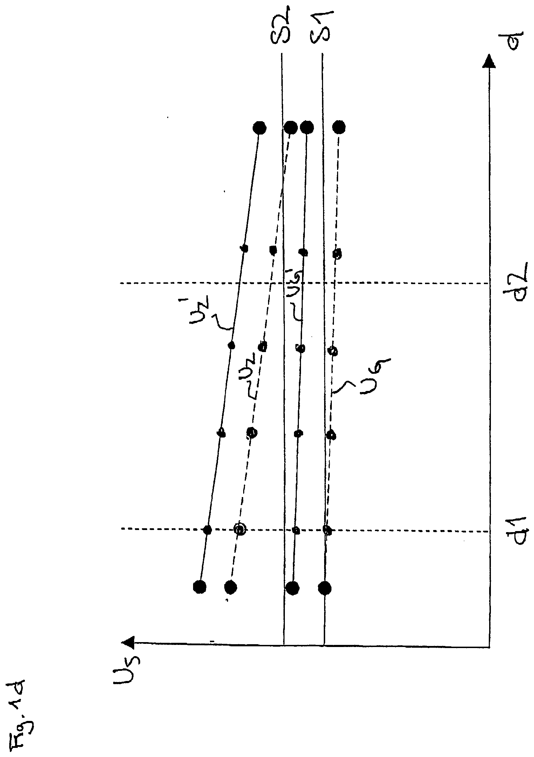

Zum Zeitpunkt tₘ wird an dem Sensor 10 ein Magnet M befestigt, welcher ein statischen Magnetfeld B₀ besitzt. Der Magnet M bzw. das durch ihn verursachte zusätzliche Magnetfeld B₀ bewirkt ein sprunghaftes Ansteigen des Sensorsignals Uₛ zum Zeitpunkt tₘ. Obgleich weiterhin Zahn und Lücke abwechselnd am Sensor 10 vorbeiziehen, fällt das Sensorsignal Uₛ in seinem Wert der manipulierten Lückenspannung U_{G}' nicht mehr unter den Schwellenwert S1. Dementsprechend wird das Impulsgebersignal Uₒᵤₜ auch nicht mehr in den Zustand Uₒᵤₜ₁ zurückversetzt, sondern verbleibt konstant im zweiten Zustand Uₒᵤₜ₂. Dieser Sachverhalt ist nochmals schematisch in der Figur 1d festgehalten.

In der Figur 1d ist zusätzlich zur Figur 1b die aufgrund des statischen Magnetfeldes B₀ manipulierte Zahnspannung U_{z}' und Lückenspannung U_{G}' eingezeichnet. Der Betrag des Unterschieds zwischen den Werten U_{z}' und U_{z} ist dabei direkt proportional zur Stärke des statischen Magnetfeldes B₀. Analog zu Figur 1c ist erkennbar, dass die Lückenspannung U_{G}' nicht länger unter den Schwellenwert S1 fällt. Da der Tachograph die zurückgelegte Wegstrecke aufgrund der alternierenden Impulsgebersignale ermittelt, kann die Wegstrecke nicht mehr an den Tachographen übertragen werden.

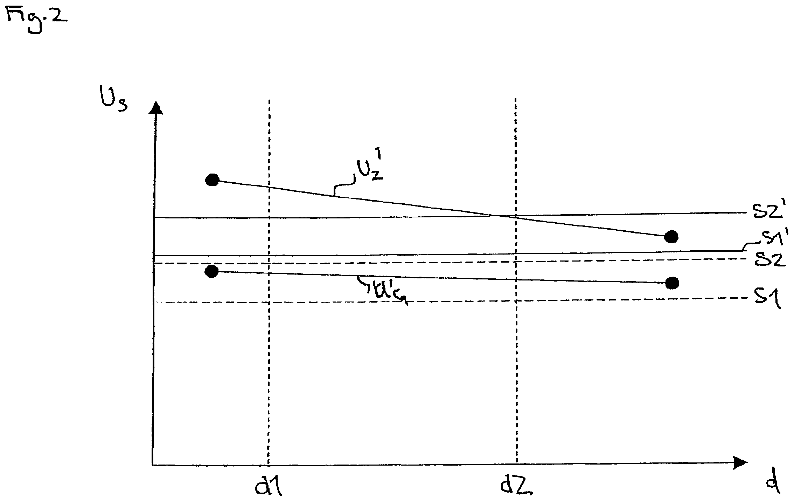

In der Figur 2 wird eine Lösung aus dem Stand der Technik dargestellt, um einen Manipulationsversuch, wie anhand der Figuren 1c und 1d erläutert, zu verhindern. Dazu werden die Schwellenwerte durch die Vorrichtung zur Signalverarbeitung dynamisch nachgeführt. Dies führt dazu, dass die Schwellenwerte S1 und S2 an die manipulierten Zahnspannungen U_{z}' und U_{G}' zu den nachgeführten Schwellenwerten S1' und S2'angepasst werden. Ein Nachteil einer derartigen Lösung ist, dass die dynamische Nachführung der Schwellenwerte beschränkt ist. Das bedeutet insbesondere, dass die Schwellenwerte bei sehr starken Magnetfeldern nicht weiter nachgeführt werden können und der Manipulationsversuch, wie in den Figuren 1c oder 1d dargelegt, dennoch erfolgreich ist.

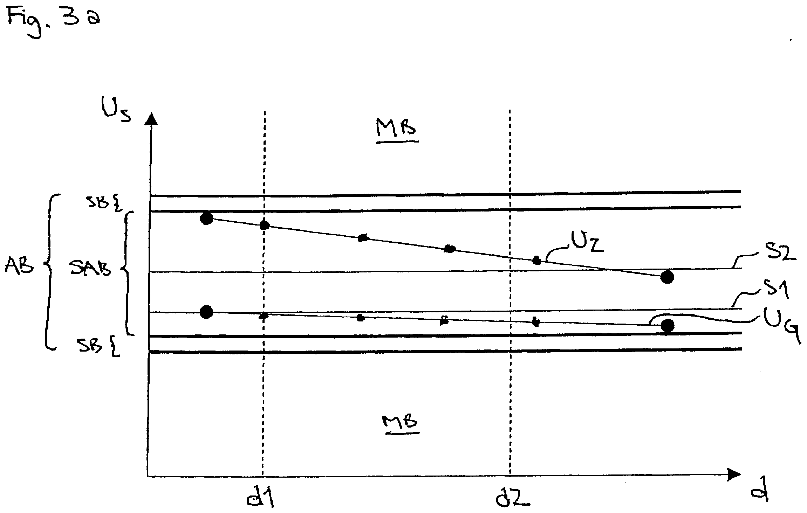

Nachfolgend wird die erfindungsgemäße Lösung zum erfolgreichen Erkennen eines Manipulationsversuchs erläutert. Anhand der Figur 3a wird die Definition des Arbeitsbereichs vom Soll-Betriebszustand der Sensoranordnung ausgehend erläutert, d.h. es befindet sich kein Magnet oder ein ähnliches Manipulationsinstrument im Bereich der Sensoranordnung.

Zunächst wird ein Arbeitsbereich des Sensorsignals der Sensoranordnung festgelegt. Der Arbeitsbereich wird neben den möglichen Abständen zwischen Zahnrad und Sensor, auch die im Soll-Betrieb auftretenden Werte der Zahnspannung U_{z} und der Lückenspannung U_{G} definiert. Nachdem die für den Soll-Betriebszustand relevanten Werte der Zahnspannung und der Lückenspannung ermittelt sind, wird ein Arbeitsbereich AB definiert, welcher sämtliche Werte der Lücken- und Zahnspannung umfasst im Bereich der möglichen Abstände umfasst. Bei der Definition des Arbeitsbereiches AB wird auch berücksichtigt, dass sich der Abstand zwischen dem Sensor und dem Zahnrad oder einer ähnlichen Vorrichtung aufgrund der Benutzung leicht verändern kann bzw. Fertigungstoleranzen unterliegt. Des Weiteren wird berücksichtigt, dass die Elektronik in gewissen Bereichen Toleranzen und Schwankungen unterliegt.

Außerhalb des Arbeitsbereiches AB befindet sich der Manipulationsbereich MB, welcher Werte des Sensorsignals Uₛ umfasst, bei welchen mit hoher Wahrscheinlichkeit von einem Manipulationsversuch auszugehen ist. Optional kann zusätzlich ein sicherer Arbeitsbereich SAB definiert werden, welcher vollständig vom Arbeitsbereich AB umfasst ist, so dass an den Rändern des sicheren Arbeitsbereiches SAB ein Sicherungsband SB gegeben ist, in welches die Lückenspannung U_{G} und die Zahnspannung U_{z} im Soll-Betriebszustand nicht eintreten.

Des Weiteren werden zwei Schwellenwerte S1 und S2 definiert, welche zu einer Schalthysteresefunktion verschaltet sind.

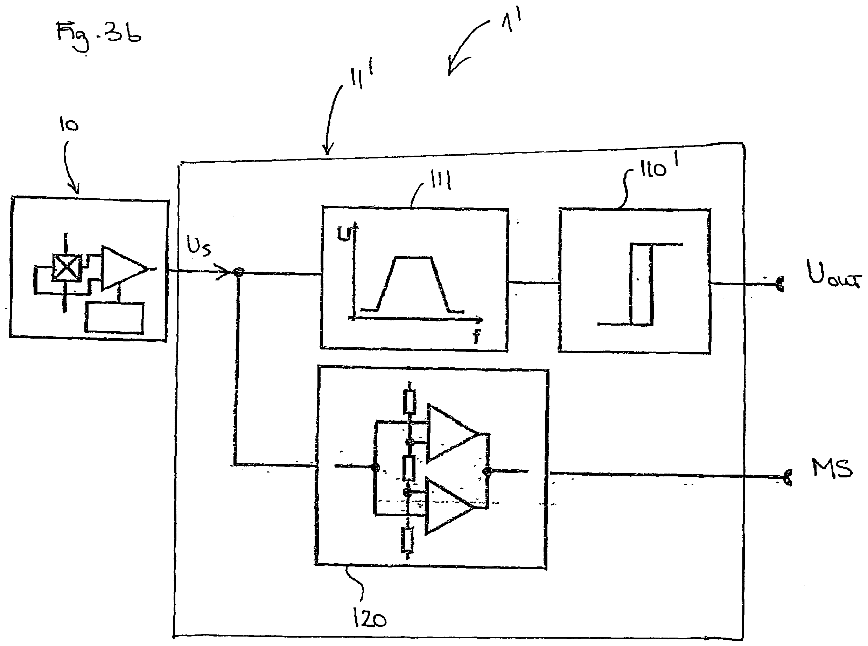

In der Figur 3b wird eine Sensoranordnung 1' gezeigt, mit welcher ein derartiger Arbeitsbereich AB implementiert wird. Die Sensoranordnung 1' weist einen Sensor 10 auf, welcher ein Hallsensor mit einem Verstärker ist und ein analoges Sensorsignal ausgibt. Das analoge Sensorsignal wird einer Vorrichtung zur Signalverarbeitung 11' zugeführt, wobei das Sensorsignal Uₛ einen Bandfilter 111 und einen ersten Vergleicher 110', beispielsweise einen Schmitt-Trigger durchläuft. Die Ausgabe des ersten Vergleichers 110 ist das Impulsgebersignal Uₒᵤₜ.

Mit Hilfe des Bandfilters 111 wird das eingehende Sensorsignal Uₛ dynamisiert, d.h. ein durch einen ein statisches Magnetfeld erzeugenden Magneten bewirkter konstanter Offset des Sensorsignals wird aus dem Sensorsignal entfernt, so dass das um den Offset befreite Sensorsignal wieder im Bereich des mindestens einen Schwellenwertes arbeitet. Das um den Offset befreite Sensorsignal wird dann dem ersten Vergleicher zur Generierung des Impulsgebersignals zugeführt. Als untere Grenzfrequenz des Bandfilters kann beispielsweise 1Hz gewählt werden, da so lediglich der niederfrequente Anteil unterhalb der Grenzfrequenz entfernt wird, das Sensorsignal ansonsten jedoch unberührt bleibt. Es findet also keine Verschiebung der Schwellenwerte, sondern eine Verschiebung des Sensorsignals in den Bereich der Schwellenwerte statt. Die dynamische Nachführung des Sensorsignals ist insofern nachteilig gegenüber der dynamischen Anpassung der Schwellenwerte, als dass aufgrund des Entfernens des niederfrequenten Sensorsignalanteils nicht mehr festgestellt werden kann, ob sich ein Zahn oder eine Lücke vor dem Sensor befinden, wenn das Zahnrad still steht, d.h. der Sensor arbeitet nicht mehr statisch.

Obgleich das hier gezeigte Ersatzschaltbild eine dynamische Anpassung des Sensorsignals nahe legt, ist es beispielsweise mittels eines Mikrokontrollers ebenso möglich die Schwellenwerte dynamisch nachzuführen. Bei einer dynamischen Nachführung der Schwellenwerte kann der Sensor auch statisch arbeiten, welches auch für andere Anwendungen Vorteile mit sich bringt Insbesondere können beide Arten der Nachführung mit den weiteren Merkmalen der Erfindung kombiniert werden.

Das Sensorsignal Uₛ wird zudem einem zweiten Vergleicher 120 zugeführt, welcher beispielsweise als Fenster-Diskriminator ausgebildet ist. Der Fenster-Diskriminator legt den Arbeitsbereich AB fest. Im Falle, dass das Sensorsignal Uₛ einen Wert aufweist, welcher außerhalb des Arbeitsbereiches AB liegt, gibt der Fenster-Diskriminator ein Manipulationssignal MS aus. Selbstverständlich ist es auch möglich, in den Fällen, in welchen das Sensorsignal Uₛ innerhalb des Arbeitsbereichs liegt, ein Signal auszugeben und auf dieses zu verzichten, wenn das Sensorsignal Uₛ außerhalb des Arbeitsbereiches liegt.

Zur Definition des sicheren Arbeitsbereichs SAB wird ein weiterer Vergleicher hinzugefügt, wobei das Sensorsignal Uₛ nunmehr sowohl den zweiten als auch den dritten Vergleicher durchläuft.

Obgleich die in der Figur 3b dargestellte Sensoranordnung 1' schaltdiagrammartig aufgezeigt ist, ist es selbstverständlich möglich, die Vorrichtung 11' zur Signalverarbeitung als Mikrokontroller auszubilden und auf diesem Funktionen zu realisieren, welche die Aufgabe eines ersten und eines zweiten, gegebenenfalls eines dritten Vergleichers ausführen. Beim erfindungsgemäßen Verfahren zum Erkennen einer Manipulation ist es lediglich wichtig, dass das Sensorsignal vor der Erzeugung des Impulsgebersignals dahingehend untersucht wird, ob es innerhalb oder außerhalb des Arbeitsbereichs liegt. So ist es anders als in der in Figur 3b gezeigten Sensoranordnung 1' auch möglich, das Sensorsignal zunächst dem zweiten Vergleicher 120 zuzuführen und nur für den Fall, dass das Sensorsignal innerhalb des Arbeitsbereichs AB liegt, das Sensorsignal auch dem ersten Vergleicher 110' zuzuführen.

Die Breite des Sicherungsbandes SB kann derart bestimmt werden, dass die Größe des Sicherungsbandes SB von einer dynamischen Anpassung der Schwellenwerte abhängig gemacht wird. Dies bedeutet, dass die Breite des Sicherungsbandes im Wesentlichen dem dynamisch nachführbaren Betrag der Schwellenwerte oder einem kleineren Betrag entspricht. Hierdurch ist es möglich, den Manipulationsbereich genau dann beginnen zu lassen, wenn die dynamische Anpassung der Schwellenwerte mit Hilfe beispielsweise des ersten Vergleichers nicht länger möglich ist.

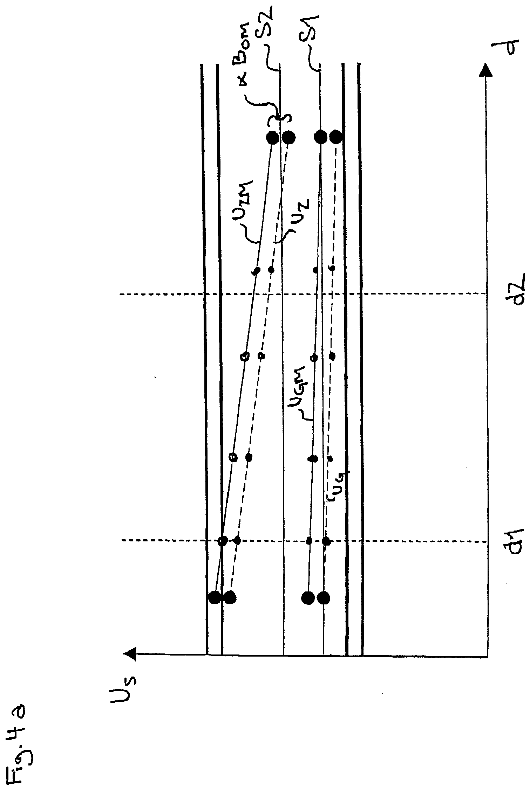

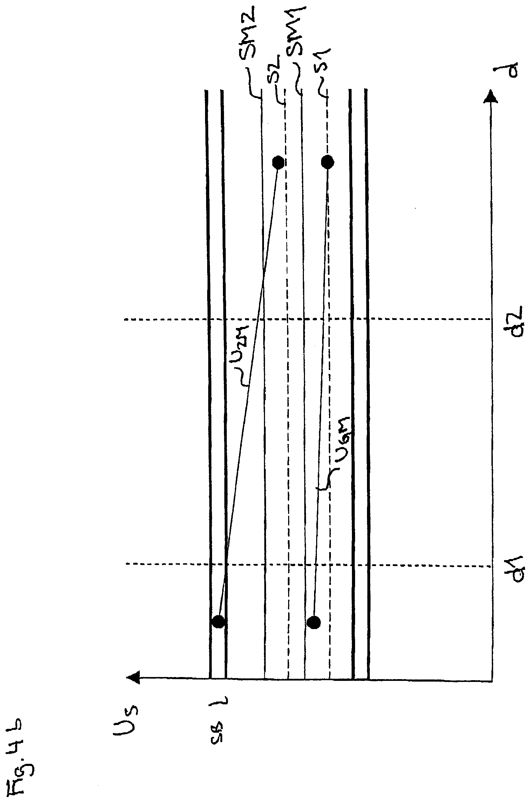

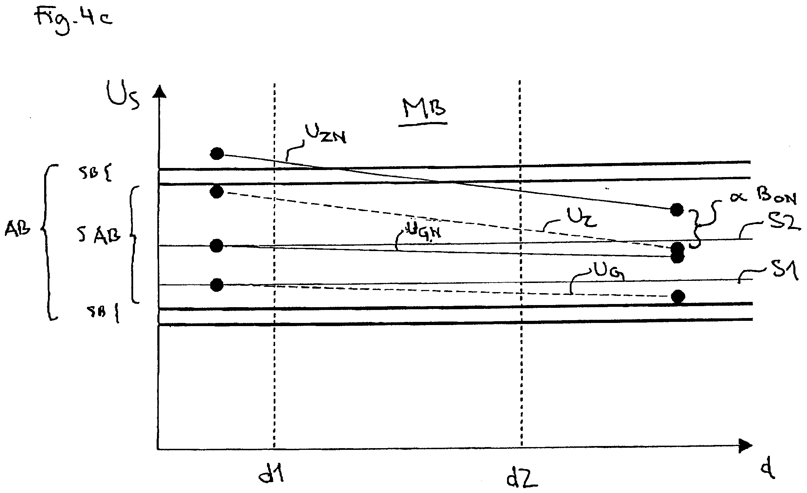

Anhand der Figuren 4 wird die Funktionsweise der Sensoranordnung anhand einiger Ist-Betriebszustände erläutert, d.h. Betriebszuständen, bei welchen die Manipulation im vorliegenden Falle mit einem Magneten versucht wird.

In der Figur 4a ist die Zahnspannung U_{z} bzw. Lückenspannung U_{G} aufgrund eines statischen Magnetfeldes B_{OM} zur manipulierten Zahnspannung U_{ZM} bzw. manipulierten Lückenspannung U_{GM} verschoben. Wie aus der Figur 4a ersichtlich ist, bewirkt das Magnetfeld B_{OM} einen Versatz der Lückenspannung U_{GM} derart, dass sämtliche Werte der manipulierten Lückenspannung U_{GM} oberhalb des Schwellenwertes S1 liegen. Zugleich wird die Zahnspannung U_{ZM} derart verschoben, dass zumindest für Abstände kleiner dem Abstand d1 die Zahnspannung U_{ZM} innerhalb des Sicherungsbandes SB liegt.

Bei dem anhand der Figur 4a illustrierten Ist-Betriebszustand wird keine dynamische Anpassung der Schwellenwerte vorgenommen. Dies führt dazu, dass keine Änderung des Impulsgebersignals Uₒᵤₜ stattfindet, da sämtliche Werte der Lückenspannung U_{GM} oberhalb des Schwellenwertes S1 liegen. Da der gewählte Arbeitsabstand d1 beträgt, erkennt die Vorrichtung zur Signalverarbeitung jedoch, dass ein gewisser Störfaktor vorliegen muss. Zwar wird, da sich die Werte der Zahnspannung U_{zM1} innerhalb des Arbeitsbereichs befinden, noch kein Manipulationssignal initiiert, es wird jedoch ein Sicherungssignal initiiert, welches eine Protokollierung des Verlaufs des Impulsgebersignals im Vergleich zum Sicherungssignal einleitet. So kann beispielsweise bei längerem Vorliegen eines Sicherungssignals und einer zeitgleichen Nicht-Änderung des Impulsgebersignals eine Aufforderung zur Wartung des Tachographen ausgegeben werden. Auch kann nach beispielsweise mehrmaliger Warnung, dass ein Sicherungssignal vorliegt, eine Fehlfunktion des Tachographen initiiert werden, welche lediglich durch einen Fachbetrieb behoben werden kann.

In der Figur 4b ist im Wesentlichen dieselbe Situation wie in der Figur 4a dargestellt, es wird lediglich eine dynamische Anpassung der Schwellenwerte von den Schwellenwerten S1, S2 zu den angepassten Schwellenwerten SM1 und SM2 durchgeführt. Obgleich weiterhin ein Sicherungssignal ausgelöst wird, alternieren nun die Werte des Impulsgebersignals Uₒᵤₜ, da die aufgrund des statischen Magnetfelds B_{OM} manipulierten Lückenspannung U_{GM} wieder sämtlich unterhalb dem angepassten Schwellenwert SM1 liegen. Eine weitere Protokollierung des Verlaufs des Impulsgebersignals mit dem Sicherungssignal ist zunächst nicht notwendig, es kann jedoch veranlasst werden, dass der Tachograph bzw. die Sensoranordnung einer Wartung unterzogen wird.

In der Figur 4c ist ein Ist-Betriebszustand gezeigt, bei welchem die Sensoranordnung dem Einfluss eines starken Magnetfeldes B_{ON} ausgesetzt ist. Die Zahnspannung U_{z} und die Lückenspannung U_{G} werden dabei um einen Betrag versetzt und zur manipulierten Zahnspannung U_{ZN} und Lückenspannung U_{GN} verschoben. Der Betrag des Versatzes zwischen dem Soll-Betriebszustand und dem Ist-Betriebszustand ist derart groß, dass keine dynamische Anpassung der Schwellenwerte S1 und S2 mehr durchgeführt werden kann. Wie jedoch erkennbar ist, ist im Bereich des vorliegenden Abstands d1 der Wert der Zahnspannung U_{ZN} derart groß, dass dieser im Manipulationsbereich MB liegt. Dies führt dazu, dass ein Manipulationssignal MS initiiert wird, wobei die Initiierung des Manipulationssignals eine Fehlfunktion am Tachographen anzeigt bzw. die Protokollierung der Fehlzustände im Tachographen bewirkt. Auch ist es möglich, den Tachographen zu sperren, so dass der Betreiber des Fahrzeugs eine Werkstatt aufsuchen muss, um den Tachographen wieder freischalten zu lassen.

Mit Hilfe des erfindungsgemäßen Verfahrens bzw. einer erfindungsgemäßen Sensoranordnung ist es also möglich, einen Manipulationsversuch zu erkennen, gegebenenfalls eine Nachführung der Schwellenwerte zu initiieren und eine Fehlfunktion des Tachographen anzuzeigen, falls sich das Sensorsignal außerhalb eines zugewiesenen Arbeitsbereiches befindet. Dadurch, dass eine Fehlfunktion des Tachographen initiiert wird, muss der vermeintliche Betrüger den Tachographen zur Wartung zum Fachhändler bringen, was weitaus mehr Zeit in Anspruch nimmt, als die durch die Manipulation gewonnene Zeit.

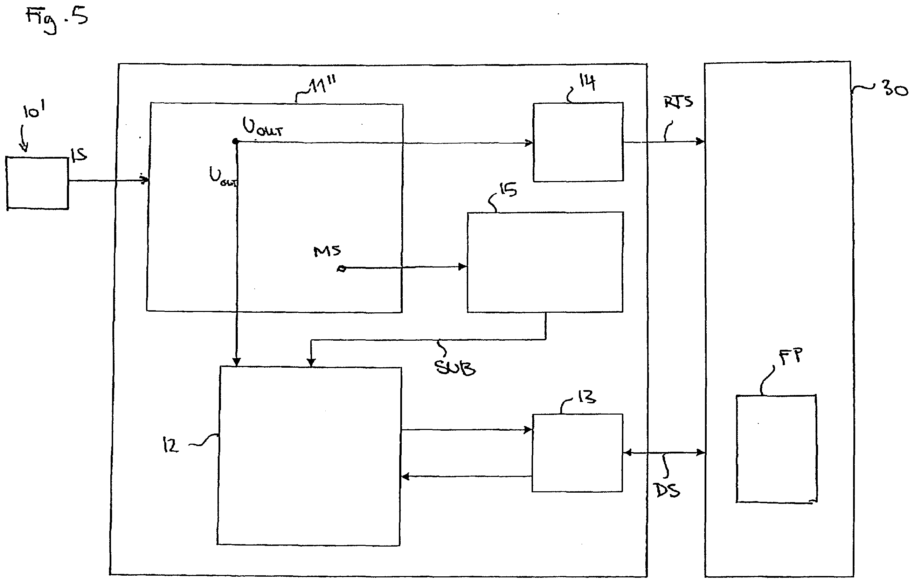

Anhand der Figur 5 wird abschließend ein Ausführungsbeispiel einer Tachographenanordnung erläutert. Die Sensoranordnung 1" weist einen Sensor 10' auf, welcher ein digitales Sensorsignal I_{S} bereitstellt. Das digitale Ausgangssignal kann beispielsweise Pulsweiten-moduliert sein. Das Sensorsignal I_{S} wird einer Vorrichtung zur Signalverarbeitung 11" zugeführt, welche einen digitalen Mikrokontroller umfasst. Dieser simuliert einen ersten und einen zweiten Vergleicher, wobei der erste Vergleicher das Sensorsignal I_{S} mit einem Schwellenwert vergleicht und hieraus ein Impulsgebersignal Uₒᵤₜ generiert.

Ein zweiter im Mikrokontroller vorhandener Vergleicher stellt fest, ob das Sensorsignal I_{S} innerhalb eines zulässigen Arbeitsbereiches arbeitet. Ist dies nicht der Fall, wird ein Manipulationssignal MS abgesetzt. Wird ein Manipulationssignal MS abgesetzt, wird dieses an das Netzteil 15 weitergeleitet. In dem Netzteil 15 wird nunmehr eine Spannungsunterbrechung initiiert, welche als Signal SUB an den Mikrokontroller 12 weitergeleitet wird. Der Mikrokontroller 12 steht mit dem Treiber 13 des Tachographen 30 in Verbindung, bereitet das Signal SUB auf und gibt es an den Treiber 13 weiter, welcher das Signal SUB als verschlüsseltes Datensignal DS an den Tachographen 30 übermittelt. In dem Tachographen 30 wird das verschlüsselte Datensignal DS in der Vorrichtung FP zur Fehlerprotokollierung aufgezeichnet und löst eine Fehlfunktion des Tachographen aus.

Dem Mikrokontroller 12 wird zudem das Impulsgebersignal Uₒᵤₜ zugeführt. Hierdurch können weitere Varianten der Auswertemechanismen zwischen dem Signal SUB und dem Impulsgebersignal Uₒᵤₜ realisiert werden. Weiterhin wird das Impulsgebersignal Uₒᵤₜ an den Signaltreiber 14 übermittelt, welcher das Impulsgebersignal als Echtzeit-Signal RTS dem Tachographen 30 zur weiteren Verarbeitung übermittelt.

## Patentansprüche

1. Sensoranordnung (1'; 1''), umfassend einen Sensor (10; 10') und eine Vorrichtung zur Signalverarbeitung (11'; 11'') eines Sensorsignals (U_{S}; I_{S}), wobei der Sensor das Sensorsignal in Abhängigkeit von der Größe eines Magnetfelds erzeugt und die Vorrichtung einen ersten Vergleicher (110') aufweist und der Vergleicher das Sensorsignal mit mindestens einem Schwellenwert (S1, S2) vergleicht und davon abhängig ein Impulsgebersignal (U_OUT) mit einem ersten oder zweiten Wert erzeugt,
**dadurch gekennzeichnet, dass** die Vorrichtung (11'; 11'') ferner zum Erkennen eines Manipulationsversuchs, der durch das zusätzliche Überlagern eines Magnetfeldes zusätzlich zum Sensormagnetfeld erfolgt, einen zweiten Vergleicher (120) aufweist, welcher das Sensorsignal mit einem vorgegebenen Arbeitsbereich (AB) vergleicht und ein Manipulationssignal (MS) initiiert, wenn ein Wert des Sensorsignals (U_{S}; I_{S}) außerhalb des Arbeitsbereichs (AB), der derart gewählt ist, dass mindestens ein Wert des Sensorsignals außerhalb des vorgegebenen Arbeitsbereichs liegt, ist und ein Versatz des Sensorsignals derart groß ist, dass sich der Zustand des Impulsgebersignals nicht mehr ändern würde, und dass die Vorrichtung einen dritter Vergleicher aufweist, welcher das Sensorsignal mit einem durch ein weiteres Werteintervall definierten sicheren Arbeitsbereich (SAB) vergleicht, wobei der sichere Arbeitsbereich (SAB) vollständig im Arbeitsbereich (AB) eingebettet ist.

2. Sensoranordnung nach einem der vorhergehenden Ansprüche, **dadurch gekennzeichnet, dass** der erste Vergleicher (110') das Sensorsignal (U_{S}; I_{S}) mit mindestens zwei Schwellenwerten (S1, S2; S1', S2'; SM1, SM2) vergleicht, wobei die zwei Schwellenwerte als Schalthysteresefunktion, vorzugsweise eine in Abhängigkeit von der Größe des Sensorsignals nachführbare Schalthysteresefunktion, ausgelegt sind.

3. Sensoranordnung nach einem der vorhergehenden Ansprüche, **dadurch gekennzeichnet, dass** die Vorrichtung (11'; 11'') zur dynamischen Nachführung des Sensorsignals ausgelegt ist.

4. Sensoranordnung nach einem der vorhergehenden Ansprüche, **dadurch gekennzeichnet, dass** der Sensor (10; 10') ein Hallsensor vorzugsweise mit einem Verstärker ist.

5. Sensoranordnung nach einem der vorhergehenden Ansprüche, **dadurch gekennzeichnet, dass** die Vorrichtung einen Mikrokontroller umfasst, welcher programmtechnisch derart ausgelegt ist, dass der erste und/oder zweite Vergleicher (110', 120) vom Mikrokontroller umfasst sind.

6. Sensoranordnung nach einem der vorhergehenden Ansprüche, **dadurch gekennzeichnet, dass** der erste Vergleicher einen Schmitt-Trigger und/oder der zweite Vergleicher einen Fenster-Diskriminator umfasst.

7. Tachographenanordnung mit einem Tachographen (20) und einer Sensoranordnung (1'; 1'') nach einem der vorhergehenden Ansprüche, **dadurch gekennzeichnet, dass** eine Vorrichtung (FB) zum Erstellen einer Fehlfunktion und/oder eines Fehlerprotokolls vorhanden ist, welche derart ausgelegt ist, dass das eingehende Manipulationssignal (MS) das Erstellen der Fehlfunktion und/oder des Fehlerprotokolls im Tachographen auslöst.

## Claims

1. Sensor arrangement (1'; 1''), comprising a sensor (10; 10') and an apparatus for signal processing (11'; 11'') a sensor signal (U_{S}; I_{S}), wherein the sensor produces the sensor signal on the basis of the magnitude of a magnetic field and the apparatus has a first comparator (110') and the comparator compares the sensor signal with at least one threshold value (S1, S2) and takes this as a basis for producing a pulse generator signal (U_OUT) having a first or second value, **characterized in that** the apparatus (11'; 11'') also has, for the purpose of recognizing a manipulation attempt effected by means of the additional superposition of a magnetic field in addition to the sensor magnetic field, a second comparator (120) which compares the sensor signal with a prescribed operating range (AB) and initiates a manipulation signal (MS) if a value of the sensor signal (U_{S}; I_{S}) is outside of the operating range (AB), which is chosen such that at least one value of the sensor signal is outside of the prescribed operating range, and an offset in the sensor signal is of such magnitude that the state of the pulse generator signal would no longer change, and **in that** the apparatus has a third comparator which compares the sensor signal with a safe operating range (SAB) defined by a further range of values, wherein the safe operating range (SAB) is completely embedded in the operating range (AB).

2. Sensor arrangement according to one of the preceding claims, **characterized in that** the first comparator (110') compares the sensor signal (U_{S}; I_{S}) with at least two threshold values (S1, S2; S1', S2'; SM1, SM2), wherein the two threshold values are designed as a switching hysteresis function, preferably a switching hysteresis function which can be readjusted on the basis of the magnitude of the sensor signal.

3. Sensor arrangement according to one of the preceding claims, **characterized in that** the apparatus (11'; 11'') is designed for dynamically readjusting the sensor signal.

4. Sensor arrangement according to one of the preceding claims, **characterized in that** the sensor (10; 10') is a Hall sensor, preferably having an amplifier.

5. Sensor arrangement according to one of the preceding claims, **characterized in that** the apparatus comprises a microcontroller which is designed in terms of programming such that the first and/or second comparator(s) (110', 120) is/are comprised by the microcontroller.

6. Sensor arrangement according to one of the preceding claims, **characterized in that** the first comparator comprises a Schmitt trigger and/or the second comparator comprises a window discriminator.

7. Tachograph arrangement having a tachograph (20) and a sensor arrangement (1'; 1'') according to one of the preceding claims, **characterized in that** an apparatus (FB) for producing a malfunction and/or an error log is present which is designed such that the incoming manipulation signal (MS) triggers the production of the malfunction and/or of the error log in the tachograph.

## Revendications

1. Ensemble de capteurs (1' ; 1''), comprenant un capteur (10 ; 10') et un dispositif de traitement de signaux (11' ; 11'') d'un signal de capteur (Uₛ ; Iₛ), le capteur générant le signal de capteur en fonction de la grandeur d'un champ magnétique et le dispositif comprenant un premier comparateur (110') et le comparateur comparant le signal de capteur avec au moins une valeur seuil (S1, S2) et en fonction de ce qui précède, générant un signal d'émetteur d'impulsions (U_OUT) avec une première ou une deuxième valeur, **caractérisé en ce que** pour identifier en outre un essai de manipulation qui a lieu du fait de la superposition supplémentaire d'un champ magnétique en supplément du champ magnétique du capteur, le dispositif (11' ; 11'') comporte un deuxième comparateur (120), lequel compare le signal de capteur avec une zone de travail (AB) prédéfinie et initie un signal de manipulation (MS) si une valeur du signal de capteur (Uₛ ; Iₛ) est extérieure à la zone de travail (AB), qui est sélectionnée de telle sorte qu'au moins une valeur du signal de capteur se situe hors de la zone de travail prédéfinie, et un décalage du signal de capteur est d'une valeur telle que l'état d'un signal d'un émetteur d'impulsions ne changerait plus et **en ce que** le dispositif comporte un troisième comparateur, lequel compare le signal de capteur avec une zone de travail (SAB) sûre, définie par un intervalle de valeur supplémentaire, la zone de travail sûre (SAB) étant totalement incorporée dans la zone de travail (AB).

2. Ensemble de capteurs selon l'une quelconque des revendications précédentes, **caractérisé en ce que** le premier comparateur (110') compare le signal de capteur (Uₛ ; Iₛ) avec au moins deux valeurs seuils (S1, S2 ; S1', S2' ; SM1, SM2), les deux valeurs seuils étant conçues sous la forme de fonction d'hystérésis de commutation, de préférence d'une fonction de hystérésis de commutation, traçable en fonction de la grandeur du signal de capteur.

3. Ensemble de capteurs selon l'une quelconque des revendications précédentes, **caractérisé en ce que** le dispositif (11' ; 11'') est conçu pour le suivi dynamique du signal de capteur.

4. Ensemble de capteurs selon l'une quelconque des revendications précédentes, **caractérisé en ce que** le capteur (10 ; 10') est un capteur de Hall, de préférence doté d'un amplificateur.

5. Ensemble de capteurs selon l'une quelconque des revendications précédentes, **caractérisé en ce que** le dispositif comprend un microcontrôleur, lequel au niveau des programmes est conçu de telle sorte que le premier et/ou le deuxième comparateur (110', 120) soient inclus dans le microcontrôleur.

6. Ensemble de capteurs selon l'une quelconque des revendications précédentes, **caractérisé en ce que** le premier comparateur comprend une bascule de Schmitt et/ou le deuxième comparateur comprend un discriminateur à fenêtres.

7. Ensemble de tachygraphes, pourvu d'un tachygraphe (20) et d'un ensemble de capteurs (1' ; 1'') selon l'une quelconque des revendications précédentes, **caractérisé en ce qu'**un dispositif (FB) destiné à établir un dysfonctionnement et/ou un journal des défaillances est présent, lequel est conçu de telle sorte, que le signal de manipulation (MS) entrant déclenche la production du dysfonctionnement et/ou du journal des défaillances dans le tachygraphe.
